# NEUE EUROPÄISCHE PATENTSCHRIFT

(11) **EP 2 501 593 B2**
(45) Veröffentlichungstag und Bekanntmachung des Hinweises auf die Entscheidung über den Einspruch: **07.02.2018**
(45) Hinweis auf die Patenterteilung: 07.01.2015
(21) Anmeldenummer: 10781660.5
(22) Anmeldetag: 16.11.2010
(51) Int. Cl.: B60T 8/172, B60T 8/1769

(54) **FAHRZEUG MIT EINER BREMSMOMENT VON HINTERRÄDERN AUF DIE VORDERRÄDER ÜBERTRAGENDEN BREMSEINRICHTUNG MIT BREMSSCHLUPFREGELUNG**
VEHICLE HAVING A BRAKE DEVICE WHICH TRANSFERS A BRAKING TORQUE FROM REAR WHEELS TO THE FRONT WHEELS, WITH BRAKE SLIP CONTROL
VÉHICULE ÉQUIPÉ D'UN DISPOSITIF DE FREINAGE TRANSMETTANT UN COUPLE DE FREINAGE DES ROUES ARRIÈRE AUX ROUES AVANT AVEC RÉGLAGE DU GLISSEMENT AU FREINAGE

(30) Priorität: 18.11.2009 DE 102009053817
(43) Veröffentlichungstag der Anmeldung: 26.09.2012
(73) Patentinhaber: KNORR-BREMSE Systeme für Nutzfahrzeuge GmbH, 80809 München (DE)
(72) Erfinder: HERGES, Michael, 80935 München (DE); WIMMER, Andreas, 85368 Moosburg (DE)
(74) Vertreter: Wiedemann, Markus
(86) Internationale Anmeldenummer: PCT/EP2010/067542
(87) Internationale Veröffentlichungsnummer: WO 2011/061170

(56) Entgegenhaltungen:
- EP-B1- 0 751 888
- WO-A3-2002/016179
- DE-A1- 1 605 935
- DE-A1- 2 946 477
- DE-A1- 3 427 725
- DE-A1- 3 542 417
- DE-A1- 3 637 594
- DE-A1- 3 637 596
- DE-A1- 3 835 906
- DE-A1- 3 902 082
- DE-A1- 4 002 035
- DE-A1- 4 428 347
- DE-A1- 10 008 550
- DE-A1- 10 026 102
- DE-A1- 10 044 821
- DE-A1- 10 259 272
- DE-A1- 10 355 097
- DE-A1- 19 528 183
- DE-A1- 19 607 322
- DE-A1- 19 607 322
- DE-A1- 19 631 203
- DE-A1- 19 846 667
- DE-A1- 19 846 667
- DE-A1- 19 939 979
- DE-A1- 19 960 793
- DE-A1-102004 004 804
- DE-A1-102004 044 788
- DE-A1-102006 026 937
- DE-A1-102007 002 791
- DE-A1-102007 050 063
- DE-A1-102007 050 063
- DE-B4-102009 053 817
- DE-C2- 3 342 553
- DE-C2- 3 928 903
- DE-C2- 19 502 420
- DE-C2- 19 527 531
- DE-T2- 60 216 661
- DE-T2- 69 101 336
- DE-T2- 69 505 932
- JP-A- S6 222 066
- US-A- 5 248 020
- US-A- 5 248 020
- US-A- 5 802 489
- US-A- 5 927 422
- "Nutzfahrzeug -Bremsanlagen: Aufbau und Funktion Prüf- und Wartungsarbeiten", Vogel Vuchverlag, 3., überarbeitete und erweiterte Auflage von 1993, insbesondere Seiten 383, 384, Kapitel 18.1. Beschreibung der Funktionsweise, System Bosch, sowie Kapitel 10.2 Dauerbremsanlagen, insbesondere Seiten 158 bis 179 zu Motorbremse, Retarder
- "Fahrwerkhandbuch: Grundlagen, Fahrdynamik, Komponenten, Systeme,Mechatronik, Perspektiven", Vieweg+ Teubner Verlag, 1. Auflage von 2007, insbesondere Seite 539, Kapitel 7.3 Längsdynamikfunktionen
- "Dynamik der Kraftfahrzeuge", Springer Berlin Heidelberg; Auflage: 4. neu bearb. Aufl. (25.März 2004), insbesondere Seite 170,171
- "Acceleration Sensor for ABS", Hideotoshi Saito et al., Reprinted from: Sensors and Actuators 1992 (SP-903), "SAE Technical Paper Series 920477", insbesondere die Seiten 47 bis 54, doi: 10.4271/920477SAE, ISSN 0148-7191
- "Bremsregelsysteme in Fahrzeugen mit Allradantrieb Teil I", ATZ Automobiltechnische Zeitschrift 102 (2000) 9, insbesondere die Seiten 756-762
- WO 2010118877 (STAND DER TECHNIK NACH ART. 54(3) EPÜ)
- DE 10 2009 017 577 B3 (Priorität der D34)
- Fendt Prospekt "Fendt 900 Vario" (Auszug undatiert)

## Beschreibung

### Stand der Technik

Die Erfindung geht aus von einem Fahrzeug mit einer Bremseinrichtung, bei welcher beim Bremsen durch in Kopplungsstellung gebrachte Kopplungsmittel die Vorderräder einer Vorderachse und die Hinterräder wenigstens einer Hinterachse miteinander starr gekoppelt sind und zwischen den Hinterrädern und den Vorderrädern Bremsmoment übertragen wird, gemäß dem Oberbegriff von Anspruch 1

Bei solchen Fahrzeugen wie sie als Traktoren beispielsweise in der Landwirtschaft oder als Baufahrzeuge eingesetzt werden, sind entweder an der Vorderachse überhaupt keine Radbremsen vorhanden oder diese sind so klein dimensioniert, dass das von ihnen maximal aufgebrachte Bremsmoment nicht ausreichend ist. Demzufolge werden die Vorderräder gänzlich oder hauptsächlich durch die Kopplung mit den über Radbremsen gebremsten Hinterrädern mitgebremst. Die Kopplung zwischen den Vorderrädern und den Hinterrädern erfolgt dabei meist über eine von Hand wahlweise oder sich nur beim Bremsen automatisch schließende Kupplung, welche die von der Antriebsmaschine angetriebene Hinterachse mit einer Gelenkwelle koppelt, welche dann Antriebsleistung bzw. Bremsleistung an die Räder der Vorderachse leitet.

In der DE 602 16 661 T2 werden landwirtschaftliche Nutzfahrzeuge mit einer bremsschlupfgeregelten Bremseinrichtung einer höheren Ausbaustufe beschrieben, welche zusätzlich zu mit Radbremsen versehenen Hinterrädern auch mit Radbremsen versehene Vorderräder aufweisen. In der Schrift werden 4S/4M-Konfigurationen bzw. 4S/3M-Konfigurationen beschrieben, bei denen die Räder der Vorderachse und die Räder der Hinterachse mit jeweils einem Raddrehzahlsensor, die Hinterachse mit einem 2-kanaligen Bremsmodulator und die Vorderachse mit einem 2-kanaligen bzw. 1-kanaligen Bremsmodulator versehen ist. Die für die Bremsschlupfregelung notwendige Bestimmung der Referenzgeschwindigkeit des Fahrzeugs wird durch die Signale von den Vorderrädern und den Hinterrädern zugeordneten Raddrehzahlsensoren ermittelt wird, insbesondere durch Mittelwertbildung der Raddrehzahlsignale.

Solche Konfigurationen von schlupfgeregelten Bremseinrichtungen sind jedoch nicht für gattungsgemäße Fahrzeuge wie landwirtschaftliche Nutzfahrzeuge (Traktoren oder Ackerschlepper) oder Baufahrzeuge tauglich, welche nur an der Hinterachse oder den Hinterachsen, aber nicht an der Vorderachse über Radbremsen bzw. dort nur über klein dimensionierte Bremsen verfügen. Da jedoch auch solche Fahrzeuge heutzutage immer höhere Geschwindigkeiten erreichen, sind beim Bremsen eine hohe Stabilität sowie möglichst kurze Bremswege erstrebenswert. Aus diesem Grund ist bei solchen Fahrzeugen ein schlupfgeregeltes Bremsen im Rahmen von ABS (Antiblockiersystem) wünschenswert. Bei bekannten ABS-Systemen ist zur Berechnung des Bremsschlupfes an den einzelnen Rädern jedoch eine Ermittlung oder Schätzung der Fahrzeugreferenzgeschwindigkeit erforderlich.

Wenn aber für die obigen Fahrzeugtypen beschrieben die Vorderräder mit den Hinterrädern beim Bremsen gekoppelt sind, so ergibt sich das Problem, dass alle Fahrzeugräder im Wesentlichen die gleiche Raddrehzahl aufweisen und möglicherweise blockieren und sich das Fahrzeug aber noch in Bewegung befindet. Aus diesem Grund können die Signale der Raddrehzahlsensoren keine Informationen über die Fahrzeugreferenzgeschwindigkeit liefern.

Ein Fahrzeug mit den Merkmalen des Oberbegriffs des Anspruchs 1 ist aus DE 198 46 667 A1 bekannt.

Der vorliegenden Erfindung liegt deshalb die Aufgabe zugrunde, ein Fahrzeug mit einer Bremseinrichtung der eingangs beschriebenen Art derart weiter zu entwickeln, dass im Rahmen der Bremseinrichtung eine ABS-Funktion mit einfachen Mitteln realisiert werden kann.

Diese Aufgabe wird erfindungsgemäß durch die Merkmale von Anspruch 1 gelöst.

### Offenbarung der Erfindung

Die Erfindung ist gekennzeichnet durch:
a) Ein Steuergerät zum bremsschlupfgeregelten Betrieb der Bremseinrichtung in einem Zustand, in welchem durch die wahlweise oder automatisch in Kopplungsstellung gebrachten Kopplungsmittel Bremsmoment von den Hinterrädern auf die Vorderräder übertragen wird,
b) wenigstens einen Drehzahlsensor in einem Antriebsstrang des Fahrzeugs zum Einsteuern von das Drehverhalten der gekoppelten Vorderräder und Hinterräder repräsentierenden Drehzahlsignalen in das Steuergerät,
c) wenigstens einen Beschleunigungssensor zum Einsteuern von die Fahrzeuglängsbeschleunigung repräsentierenden Beschleunigungssignalen in das Steuergerät und/oder eine Fahrzeug-GPS-Einrichtung zum Einsteuern von Positionen des Fahrzeugs repräsentierenden Positionssignalen in das Steuergerät, wobei
d) das Steuergerät ausgebildet ist, dass es basierend auf den Beschleunigungssignalen und/oder auf den Positionssignalen wenigstens eine eine Fahrzeugreferenzgeschwindigkeit und/oder eine Fahrzeugreferenzbeschleunigung charakterisierende erste Größe und basierend auf den Drehzahlsignalen eines einzigen Drehzahlsensors an irgendeiner Stelle des Antriebsstrangs unter Berücksichtigung von bekannten Übersetzungen innerhalb des Antriebsstrangs eine das Drehverhalten der gekoppelten Vorderräder und Hinterräder charakterisierende zweite Größe ermittelt und den Bremsschlupf der gekoppelten Vorderräder und Hinterräder basierend auf der ersten Größe und der zweiten Größe berechnet.

Mit anderen Worten wird die zur Ermittlung des Radschlupfes beim Bremsen benötigte Wert für die Fahrzeugreferenzgeschwindigkeit und/oder für die Fahrzeugreferenzbeschleunigung bzw. für die Fahrzeugreferenzverzögerung aus Signalen eines Beschleunigungssensors und/oder eines Fahrzeug-GPS (Global Positioning System)-Einrichtung errechnet.

Beispielsweise kann durch Integration der vom Beschleunigungssensor gemessenen Fahrzeuglängsbeschleunigung über einen Zeitraum die in diesem Zeitraum vorliegende Fahrzeuglängsgeschwindigkeit als Fahrzeugreferenzgeschwindigkeit berechnet werden. Alternativ oder zusätzlich kann aus den von der Fahrzeug-GPS (Global Positioning System)-Einrichtung gelieferten Daten wie die vom Fahrzeug angefahrenen Positionen, der zurückgelegten Wegstrecke zwischen diesen Positionen und der dafür benötigten Zeit ebenfalls die Fahrzeugreferenzgeschwindigkeit errechnet werden.

Falls als ABS-Eingangsgröße zusätzlich die Fahrzeugreferenzbeschleunigung erforderlich ist, so liefert der Beschleunigungssensor einen solchen Wert direkt ohne Umrechnung. Bei einer Auswertung der Daten der Fahrzeug-GPS (Global Positioning System)-Einrichtung ist zusätzlich eine Differentiation des wie oben beschrieben gewonnenen Geschwindigkeitsverlaufs des Fahrzeugs nach der Zeit notwendig.

Andererseits wird die Information über das gerade vorliegende Raddrehverhalten der zumindest zum Bremsen gekoppelten Vorder- und Hinterräder mit Hilfe eines Drehzahlsensors gewonnen, welcher innerhalb des Antriebsstranges an einer beliebigen sich beim Bremsen drehenden Komponente des Antriebsstrangs angeordnet sein kann. Zu solchen Komponenten zählen die Räder, das Bremsmoment von den Hinterrädern bzw. Hinterradbremsen auf die Vorderräder übertragende Wellen, insbesondere Gelenk- und Kardanwellen, die Antriebsmaschine oder Getriebe, insbesondere Differentialgetriebe sowie Kupplungen. Im Gegensatz zum Stand der Technik, bei welchem für jedes separat bremsschlupfgeregelte Rad ein eigener Raddrehzahlsensor erforderlich ist, genügt hier ein einziger Drehzahlsensor an irgendeiner Stelle des Antriebsstranges, aus dessen Signalen das Drehverhalten der gekoppelten Räder unter Berücksichtigung der bekannten Übersetzungen innerhalb des Antriebsstranges ermittelt wird. Der Drehzahlsensor muss auch nicht radnah sondern kann an einer geschützten Stelle wie beispielsweise in einem Getriebe angeordnet werden.

Mit diesen Maßnahmen wird es möglich, auch Fahrzeuge ohne Radbremsen bzw. klein dimensionierten Radbremsen an der Vorderachse mit einer ABS-Bremseinrichtung bzw. mit einer Bremsschlupfregelung zu versehen. Insbesondere hat die Erfindung den Vorteil, dass bei Kopplung der Vorderräder mit den Hinterrädern auch die Vorderräder bremsschlupfgeregelt abgebremst und dadurch gegenüber dem Stand der Technik beim Bremsen eine höhere Stabilität an der Vorderachse sowie kürzere Bremswege erzielt werden.

Bei dem Fahrzeug handelt es sich insbesondere um ein allradgetriebenes Fahrzeug wie ein Baustellennutzfahrzeug oder ein Ackerschlepper.

Durch die in den Unteransprüchen aufgeführten Maßnahmen sind vorteilhafte Weiterbildungen und Verbesserungen der in den unabhängigen Ansprüchen angegebenen Erfindung möglich.

Die Bremseinrichtung ist bevorzugt eine druckmittelbetätigte Bremseinrichtung, insbesondere eine elektrische, hydraulische, elektro-hydraulische, pneumatische, pneumatisch-hydraulische, hydro-pneumatische oder elektropneumatische Bremseinrichtung.

Unter einer elektro-pneumatischen Bremseinrichtung ist eine Bremseinrichtung zu verstehen, bei welcher ein Bremswertgeber elektrische Signale für elektropneumatische Druckregelmoduln oder Modulatoren erzeugt, welche abhängig von diesen elektrischen Signalen aus einem pneumatischen Vorratsdruck einen Bremsdruck für pneumatische Bremszylinder erzeugen.

Bevorzugt sind weiterhin wenigstens zwei redundante Drehzahlsensoren vorgesehen, wobei jeder Drehzahlsensor einer anderen Komponente des Antriebsstranges zugeordnet ist.

Gemäß einer Weiterbildung ist an der Vorderachse ein sperr- und entsperrbares Vorderachsdifferential vorgesehen, welches beim Bremsen durch das Steuergerät entsperrt wird. Dadurch wird das beim Bremsen unter µ-split-Bedingungen das auf das Fahrzeug wirkende Giermoment begrenzt. Insbesondere kann das Vorderrad, das auf der Seite mit höherem Reibwert läuft, nicht wesentlich mehr Bremskraft auf den Untergrund übertragen als das Rad auf der Seite mit dem höheren Reibwert.

Die wahlweise oder automatisch in Kopplungsstellung bringbaren Kopplungsmittel zwischen den Hinterrädern und den Vorderrädern sind bevorzugt auch zum Übertragen von Antriebsmoment zwischen den Hinterrädern und den Vorderrädern vorgesehen. Beispielsweise umfassen die Kopplungsmittel ein einen Teilantriebsstrang der Hinterachse und einen Teilantriebsstrang der Vorderachse koppelndes und durch das Steuergerät sperr- und entsperrbares Differentialgetriebe, welches wenigstens zum Bremsen vom Steuergerät in Sperrstellung geschaltet wird.

Alternativ oder zusätzlich können die Kopplungsmittel auch eine durch das Steuergerät gesteuerte, einen Teilantriebsstrang der Hinterachse und einen Teilantriebsstrang der Vorderachse miteinander koppelnde bzw. voneinander entkoppelnde Allradkupplung beinhalten, welche beispielsweise abhängig vom Betätigungsgrad eines Bremswertgebers angesteuert wird.

Der wenigstens eine Beschleunigungssensor ist bevorzugt zur Messung der Beschleunigung in mehreren Achsen und das Steuergerät ausgebildet, aus den den Achsen zugeordneten Beschleunigungssignalen die Fahrzeuglängsbeschleunigung zu berechnen. Weiterhin sind beispielsweise wenigstens zwei redundante Beschleunigungssensoren vorgesehen sind.

Gemäß einer Weiterbildung sind der wenigstens eine Beschleunigungssensor und das Steuergerät zu einer Baueinheit zusammengefasst. Alternativ kann der Beschleunigungssensor auch separat vom Steuergerät an geeigneter Stelle am Fahrzeug angeordnet sein.

Das Steuergerät ist insbesondere ausgebildet, dass es aus mehreren Positionssignalen des Fahrzeug-GPS die momentane Fahrzeugreferenzgeschwindigkeit und/oder die momentane Fahrzeugreferenzbeschleunigung berechnet. Dabei kann die Fahrzeug-GPS-Einrichtung in das Steuergerät integriert sein oder sie stellt eine separate Einheit dar.

Dann ist das Steuergerät bevorzugt ausgebildet, dass es
a) basierend auf den Positionssignalen der Fahrzeug-GPS-Einrichtung die Beschleunigungssignale des Beschleunigungssensors oder
b) basierend auf den Beschleunigungssignalen des Beschleunigungssensors die Positionssignale der Fahrzeug-GPS-Einrichtung plausibilisiert und/oder kalibriert.

Weiterhin kann das Steuergerät ausgebildet sein, dass es basierend auf den Signalen betreffend die Fahrzeugreferenzgeschwindigkeit und/oder die Fahrzeugreferenzbeschleunigung sowie auf den Drehzahlsignalen den Ist-Bremsschlupf der gekoppelten Vorderräder und Hinterräder ermittelt und dann den Bremsschlupf der gekoppelten Vorderräder und Hinterräder abhängig von einer Abweichung des ermittelten Ist-Bremsschlupfs von einem Soll-Bremsschlupf einregelt.

Genaueres geht aus der folgenden Beschreibung eines Ausführungsbeispiels hervor.

### Zeichnung

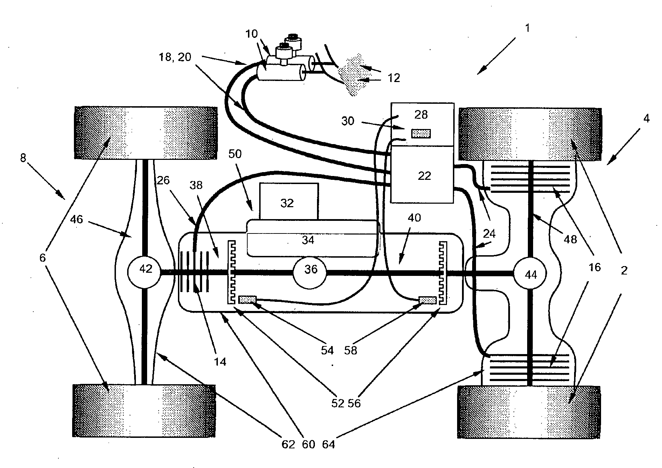

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Schaltplan einer schlupfgeregelten Bremseinrichtung eines Fahrzeugs gemäß einer bevorzugten Ausführungsform der Erfindung.

### Beschreibung des Ausführungsbeispiels

Die in der Figur schematisch gezeigte druckmittelbetätigte, bevorzugt hydraulische eines landwirtschaftlichen Nutzfahrzeugs wie einem Traktor oder Ackerschlepper.

Anstatt hydraulisch kann die Bremseinrichtung 1 selbstverständlich auch elektro-hydraulisch, hydro-pneumatisch, elektro-pneumatisch oder rein pneumatisch, rein hydraulisch oder auch rein elektrisch ausgeführt sein, mit der Einschränkung, dass neben den pneumatischen und/oder hydraulischen Komponenten einer solchen pneumatischen, hydraulischen oder hydropneumatischen Bremseinrichtung 1 auch elektrische bzw. elektronische ABS-Komponenten vorhanden sein müssen, um eine Bremsschlupfregelung realisieren zu können.

Die hydraulische Bremseinrichtung 1 ist beispielsweise zweikreisig, umfassend einen einer Vorderachse 8 mit Vorderrädern 6 zugeordneten Vorderachsbremskreis und einen einer Hinterachse 4 mit Hinterrädern 2 zugeordneten Hinterachsbremskreis. Weiterhin ist ein zweikreisiger hydraulischer Bremszylinder 10 vorhanden, wobei jeder Bremskreis (Vorderachse, Hinterachse) beispielsweise von je einem Bremspedal 12 betätigbar ist.

Die Bremseinrichtung 1 ist bremsschlupfgeregelt und beinhaltet daher ein Antiblockiersystem (ABS), welches den Bremsschlupf an Vorderachs- und Hinterachsradbremsen 14, 16 auf einen optimalen Bremsschlupf einregelt. Von dem zweikreisigen Bremszylinder 10 erstrecken sich daher hydraulische Bremsleitungen 18, 20 zu einer ABS-Hydraulikeinheit 22 und von dieser wiederum hydraulische Bremsleitungen 24, 26 zu den jeweiligen Bremsaktuatoren 14, 16 der Vorderachse 8 und der Hinterachse 4. Die ABS-Hydraulikeinheit 22 wird von einem elektronischen ABS-Steuergerät 28 elektrisch gesteuert. Das ABS-Steuergerät 28 ist bevorzugt mit einem Beschleunigungssensor 30 zur Messung wenigstens der Längsbeschleunigung des Fahrzeugs in einer Baueinheit integriert. Anstatt nur einer Hinterachse 4 können auch mehrere, beispielsweise zwei Hinterachsen vorhanden sein.

Das Nutzfahrzeug hat eine Antriebsmaschine 32, beispielsweise in Form einer Brennkraftmaschine. Im vorliegenden Fall werden die Vorder- und Hinterräder 6, 2 von der Antriebsmaschine 32 über ein Getriebe 34, ein mittiges Differential 36 mit Längssperre und jeweils eine Gelenkwelle 38, 40 sowie ein an jeder Achse 4, 8 vorhandenes Achsdifferential 42, 44 mit Quersperre angetrieben. Über Antriebswellen 46 der Vorderachse 8 und Antriebswellen 48 der Hinterachse 4 gelangt die in die Gelenkwellen 38, 40 eingesteuerte Antriebsleistung von den Achsdifferentialen 42, 44 zu den Vorderrädern 6 bzw. zu den Hinterrädern 2. Die genannten Komponenten 32, 34, 36, 38, 40, 42, 44, 46, 48 bilden zusammen einen Antriebsstrang 50 des Fahrzeugs aus, wobei die der Vorderachse 8 zugeordneten Komponenten 38, 42, 46 und die der Hinterachse 4 zugeordneten Komponenten 40, 44, 48 jeweils einen Teilantriebsstrang ausbilden.

Die Hinterräder 2 sind jeweils bevorzugt mit radweisen Bremsaktuatoren in Form von beispielsweise hydraulisch betätigten Lamellenbremsen 16 versehen, während die Vorderräder 6 über eine auf die der Vorderachse 8 zugeordnete Gelenkwelle 38 wirkende Lamellenbremse 14 abgebremst werden. Diese Vorderachs-Lamellenbremse 14 kann allerdings nur einen Bruchteil des Bremsmoments aufbringen, welches die Lamellenbremsen 16 der Hinterachse 4 aufzubringen vermögen.

Das mittige Differential 36 sowie die Achsdifferentiale 42, 44 als Ausgleichsgetriebe sind bevorzugt vom ABS-Steuergerät 28 oder von einem anderen Steuergerät elektrisch gesteuert und von diesem in eine gesperrte und in eine entsperrte Stellung schaltbar. In der gesperrten Stellung sind bekanntermaßen die jeweils angeschlossenen Wellen 38, 40, 46, 48 miteinander starr verbunden, die entsperrte Stellung erlaubt hingegen eine unterschiedliche Drehzahl dieser Wellen 38, 40, 46, 48.

Die Hinterräder 2 sind daher mit den Vorderrädern 6 durch das gesperrte mittige Differential 36 bzw. durch die gesperrten Achsdifferentiale 42, 44 zur Übertragung von Antriebs- und Bremsleistung koppelbar.

Die Kopplung bzw. Entkopplung der Vorderachs-Gelenkwelle 38 und der Hinterachs-Gelenkwelle 40 kann beispielsweise auch mittels einer hydraulischen Allradkupplung erfolgen, welche beispielsweise von einem Magnetventil in Abhängigkeit von der Betätigung der Bremspedale 12 angesteuert wird, um einen Druckmittelfluss zu oder von der hydraulischen Allradkupplung zu steuern.

Weiterhin ist an der der Vorderachse 8 zugeordneten Gelenkwelle 38 ein Polrad 52 eines Drehzahlsensors 54 und an der der Hinterachse 4 zugeordneten Gelenkwelle 40 ein Polrad 56 eines weiteren Drehzahlsensors 58 mitdrehend angeordnet.

Das Getriebe 34, das mittige Differential 36, die beiden Gelenkwellen 38, 40, die beiden Drehzahlsensoren 54, 58 inklusive Polräder 52, 56 sowie der der Vorderachse 8 zugeordnete Bremsaktuator 14 sind bevorzugt in einem gemeinsamen mittigen Gehäuse 60 untergebracht, an welches die Antriebsmaschine 32 angeflanscht ist.

Weiterhin sind die der Vorderachse 8 bzw. der Hinterachse 4 zugeordneten Achsdifferentiale 42, 44 sowie die zugeordneten Antriebswellen 46, 48 in jeweils einem separaten Achsgehäuse 62, 64 beherbergt.

Das mittige Differential 36, welches die Gelenkwelle 38 der Vorderachse 8 und die Gelenkwelle 40 der Hinterachse 4 koppelt bzw. entkoppelt, wird von dem ABS-Steuergerät 28 bevorzugt derart angesteuert, dass es im Bremsfall automatisch in die gesperrte Stellung geschaltet ist, wodurch die Vorderräder 6 und die Hinterräder 2 miteinander starr verbunden sind und ein Rad-Gleichlauf erzeugt wird, d.h. die Vorderräder 6 und die Hinterräder 2 drehen dann beim Verzögern mit derselben Raddrehzahl. Mit anderen Worten sind dann beim Bremsen die Vorderräder 6 mit den Hinterrädern 2 gekoppelt. Daraus wird dann eine sog. Allradbremsung an allen Rädern 2, 6 des Fahrzeugs verwirklicht.

Da das von dem Bremsaktuator 14 der Vorderachse 8 aufgebrachte Bremsmoment relativ gering ist, können über das in die gesperrte Stellung geschaltete mittige Differential 36 die Vorderräder 6 zusammen mit den Hinterrädern 2 abgebremst und dabei Bremsmoment von den Bremsaktuatoren 16 der Hinterachse 4 über die Antriebswellen 48, das Achsdifferential 44, die Gelenkwelle 40, das mittige Differential 36, die Gelenkwelle 38, das Achsdifferential 42 und die Antriebswellen 48 auf die Vorderräder 6 übertragen werden.

Durch die Kopplung über den geschlossenen Antriebs- bzw. Bremsstrang 50, d.h. durch das in Sperrstellung geschaltete mittige Differential 36 bewirkt dann ein Abbremsen der Hinterräder 2, dass auch an den Vorderrädern 6 von dem an der Hinterachse 4 aufgebrachten Bremsmoment herrührende Bremskräfte erzeugt werden, welche sich dann zu den von der Vorderachsbremse 14 erzeugten Bremskräften addieren.

Der Bremsdruck in den Bremsaktuatoren 14, 16 wird durch die in das ABS-Steuergerät 28 integrierten Routinen der ABS- oder Bremsschlupfregelung in einer Anzahl von Zyklen gesteuert bzw. geregelt, von denen jeder Zyklus eine Druckverringerungsphase, eine Druckhaltephase und eine Druckerhöhungsphase umfasst.

Die beiden hier redundanten und diversitären, d.h. an unterschiedlichen Komponenten 38, 40 angeordneten Drehzahlsensoren 54, 58 dienen zum Einsteuern von das Drehverhalten der beiden Gelenkwellen 38, 40 (Vorderachse und Hinterachse) repräsentierenden Drehzahlsignalen in das ABS-Steuergerät 28, der Beschleunigungssensor 30 zum Einsteuern von die Fahrzeuglängsbeschleunigung repräsentierenden Beschleunigungssignalen in das ABS-Steuergerät 28. Alternativ könnte auch eine hier nicht gezeigte Fahrzeug-GPS (Global Positioning System)-Einrichtung zum Einsteuern von Positionen des Fahrzeugs repräsentierenden Positionssignalen in das ABS-Steuergerät 28 vorgesehen sein.

Dann wird der zur Ermittlung des Radschlupfes beim Bremsen benötigte Wert für die Fahrzeugreferenzgeschwindigkeit und/oder für die Fahrzeugreferenzbeschleunigung bzw. für die Fahrzeugreferenzverzögerung aus den Signalen des Beschleunigungssensors 30 und/oder der Fahrzeug-GPS-Einrichtung durch das ABS-Steuergerät 28 errechnet. Insbesondere wird durch mathematische Integration der vom Beschleunigungssensor 30 gemessenen Fahrzeuglängsbeschleunigung über einen Zeitraum die in diesem Zeitraum vorliegende Fahrzeuglängsgeschwindigkeit als Fahrzeugreferenzgeschwindigkeit berechnet. Alternativ oder zusätzlich kann aus den von der Fahrzeug-GPS-Einrichtung gelieferten Daten wie die vom Fahrzeug angefahrenen Positionen, der zurückgelegten Wegstrecke zwischen diesen Positionen und der dafür benötigten Zeit ebenfalls die Fahrzeugreferenzgeschwindigkeit errechnet werden.

Andererseits wird die Information über das gerade vorliegende Raddrehverhalten der zumindest zum Bremsen gekoppelten Vorder- und Hinterräder 6, 2 mit Hilfe der Drehzahlsensoren 54, 58 gewonnen. Durch die Signale der Drehzahlsensoren 54, 58 und einen Vergleich mit der zuvor bestimmten Fahrzeugreferenzgeschwindigkeit erkennt dann das ABS-Steuergerät 28, ob sich die Hinterräder bzw. die Vorderräder 2, 6 in einem unzulässigen Bremsschlupf befinden und steuert dem durch Auslösen der oben beschriebenen Zyklen entgegen.

Auf diese Weise kann auch ein Fahrzeug mit im Bremsfall zur Übertragung von Bremsmoment miteinander gekoppelten Vorderrädern 6 und Hinterrädern 2 mit einer ABS-Regelung betrieben werden.

### Bezugszeichenliste

1 Bremseinrichtung
2 Hinterräder
4 Hinterachse
6 Vorderräder
8 Vorderachse
10 Bremszylinder
12 Bremspedal
14 Bremse VA
16 Bremse HA
18 Bremsleitung
20 Bremsleitung
22 ABS-Hydraulikeinheit
24 Bremsleitung
26 Bremsleitung
28 ABS-Steuergerät
30 Beschleunigungssensor
32 Antriebsmaschine
34 Getriebe
36 Differential
38 Gelenkwelle
40 Gelenkwelle
42 Achsdifferential
44 Achsdifferential
46 Antriebswellen
48 Antriebswellen
50 Antriebsstrang
52 Polrad
54 Drehzahlsensor
56 Polrad
58 Drehzahlsensor
60 Gehäuse
62 Achsgehäuse
64 Achsgehäuse

## Patentansprüche

1. Fahrzeug mit einer Bremseinrichtung (1), bei welcher beim Bremsen durch in Kopplungsstellung gebrachte Kopplungsmittel (36) die Vorderräder (6) einer Vorderachse (8) und die Hinterräder (2) wenigstens einer Hinterachse (4) miteinander starr gekoppelt sind und zwischen den Hinterrädern (2) und den Vorderrädern (6) Bremsmoment übertragen wird, beinhaltend:
a) ein Steuergerät (28) zum bremsschlupfgeregelten Betrieb der Bremseinrichtung (1) in einem Zustand, in welchem die Kopplungsmittel (36) in Kopplungsstellung gebracht sind, wobei bei Kopplung der Vorderräder mit den Hinterrädern auch die Vorderräder bremsschlupfgeregelt abgebremst sind,
b) wenigstens einen Drehzahlsensor (54, 58) in einem Antriebsstrang (50) des Fahrzeugs zum Einsteuern von das Drehverhalten der gekoppelten Vorderräder (6) und Hinterräder (2) repräsentierenden Drehzahlsignalen in das Steuergerät (28), **gekennzeichnet durch**
c) wenigstens einen Beschleunigungssensor (30) zum Einsteuern von die Fahrzeuglängsbeschleunigung repräsentierenden Beschleunigungssignalen in das Steuergerät (28) und/oder eine Fahrzeug-GPS-Einrichtung zum Einsteuern von Positionen des Fahrzeugs repräsentierenden Positionssignalen in das Steuergerät (28), wobei
d) das Steuergerät (28) ausgebildet ist, dass es basierend auf den Beschleunigungssignalen und/oder auf den Positionssignalen wenigstens eine eine Fahrzeugreferenzgeschwindigkeit und/oder eine Fahrzeugreferenzbeschleunigung charakterisierende erste Größe und basierend auf den Drehzahlsignalen eines einzigen Drehzahlsensors an irgendeiner Stelle des Antriebsstrangs, aus dessen Signalen unter Berücksichtigung von bekannten Übersetzungen innerhalb des Antriebsstrangs eine das Drehverhalten der zumindest zum Bremsen gekoppelten Vorderräder (6) und Hinterräder (2) charakterisierende zweite Größe ermittelt und den Bremsschlupf der gekoppelten Vorderräder (6) und Hinterräder (2) basierend auf der ersten Größe und der zweiten Größe berechnet.

2. Fahrzeug nach Anspruch 1, **dadurch gekennzeichnet, dass** die Bremseinrichtung (1) eine elektrische, hydraulische, elektro-hydraulische, pneumatische, pneumatisch-hydraulische, elektropneumatische oder hydro-pneumatische Bremseinrichtung ist.

3. Fahrzeug nach Anspruch 1 oder 2, **dadurch gekennzeichnet, dass** wenigstens zwei redundante Drehzahlsensoren (54, 58) vorgesehen sind, wobei jeder Drehzahlsensor (54, 58) einer anderen Komponente (38, 40) des Antriebsstrangs (50) zugeordnet ist.

4. Fahrzeug nach einem der vorhergehenden Ansprüche, **dadurch gekennzeichnet, dass** an der Vorderachse (8) ein sperr- und entsperrbares Achsdifferential (42) vorgesehen ist, welches beim Bremsen durch das Steuergerät (28) entsperrt wird.

5. Fahrzeug nach einem der vorhergehenden Ansprüche, **dadurch gekennzeichnet, dass** die wahlweise oder automatisch in Kopplungsstellung bringbaren Kopplungsmittel (36) zwischen den Hinterrädern (2) und den Vorderrädern (6) auch zum Übertragen von Antriebsmoment zwischen den Hinterrädern (2) und den Vorderrädern (6) vorgesehen sind.

6. Fahrzeug nach Anspruch 5, **dadurch gekennzeichnet, dass** die Kopplungsmittel (36) ein einen Teilantriebsstrang (40, 44, 48) der Hinterachse (4) und einen Teilantriebsstrang (38, 42, 46) der Vorderachse (8) koppelndes und durch das Steuergerät (28) sperr- und entsperrbares Differential umfassen, welches wenigstens zum Bremsen vom Steuergerät (28) gesperrt wird.

7. Fahrzeug nach einem der Ansprüche 1 bis 5, **dadurch gekennzeichnet, dass** die Kopplungsmittel eine durch das Steuergerät (28) gesteuerte, einen Teilantriebsstrang (40, 44, 48) der Hinterachse (4) und einen Teilantriebsstrang (38, 42, 46) der Vorderachse (8) miteinander koppelnde bzw. voneinander entkoppelnde Allradkupplung beinhaltet, welche abhängig vom Betätigungsgrad eines Bremswertgebers (10, 12) angesteuert ist.

8. Fahrzeug nach einem der vorhergehenden Ansprüche, **dadurch gekennzeichnet, dass** der wenigstens eine Beschleunigungssensor (30) zur Messung der Beschleunigung in mehreren Achsen und das Steuergerät (28) ausgebildet ist, aus den den Achsen zugeordneten Beschleunigungssignalen die Fahrzeuglängsbeschleunigung zu berechnen.

9. Fahrzeug nach einem der vorhergehenden Ansprüche, **dadurch gekennzeichnet, dass** wenigstens zwei redundante Beschleunigungssensoren (30) vorgesehen sind.

10. Fahrzeug nach einem der vorhergehenden Ansprüche, **dadurch gekennzeichnet, dass** der wenigstens eine Beschleunigungssensor (30) und das Steuergerät (28) zu einer Baueinheit zusammengefasst sind.

11. Fahrzeug nach einem der vorhergehenden Ansprüche, **dadurch gekennzeichnet, dass** das Steuergerät (28) ausgebildet ist, dass es aus mehreren Positionssignalen des Fahrzeug-GPS die momentane Fahrzeugreferenzgeschwindigkeit und/oder die momentane Fahrzeugreferenzbeschleunigung berechnet.

12. Fahrzeug nach Anspruch 11, **dadurch gekennzeichnet, dass** die Fahrzeug-GPS-Einrichtung in das Steuergerät (28) integriert ist oder eine separate Einheit darstellt.

13. Fahrzeug nach einem der vorhergehenden Ansprüche, **dadurch gekennzeichnet, dass** das Steuergerät (28) ausgebildet ist, dass es
a) basierend auf den Positionssignalen der Fahrzeug-GPS-Einrichtung die Beschleunigungssignale des Beschleunigungssensors (30) oder
b) basierend auf den Beschleunigungssignalen des Beschleunigungssensors (30) die Positionssignale der Fahrzeug-GPS-Einrichtung plausibilisiert und/oder kalibriert.

14. Fahrzeug nach einem der vorhergehenden Ansprüche, **dadurch gekennzeichnet, dass** das Steuergerät (28) ausgebildet ist, dass es basierend auf den Signalen betreffend die Fahrzeugreferenzgeschwindigkeit und/oder die Fahrzeugreferenzbeschleunigung sowie auf den Drehzahlsignalen den Ist-Bremsschlupf der gekoppelten Vorderräder (6) und Hinterräder (2) ermittelt und dann den Bremsschlupf der gekoppelten Vorderräder (6) und Hinterräder (2) abhängig von einer Abweichung des ermittelten Ist-Bremsschlupfs von einem Soll-Bremsschlupf einregelt.

## Claims

1. Vehicle having a brake device (1), in which, during braking, the front wheels (6) of a front axle (8) and the rear wheels (2) of at least one rear axle (4) are rigidly coupled to one another, and braking torque is transferred between the rear wheels (2) and the front wheels (6), by coupling means (36) brought into a coupling position, containing:
a) a control unit (28) for brake-slip-controlled operation of the brake device (1) in a state in which the coupling means (36) are brought into a coupling position, wherein, during coupling of the front wheels to the rear wheels, the front wheels are also braked in a brake-slip-controlled manner,
b) at least one rotational speed sensor (54, 58) in a drive train (50) of the vehicle for inputting into the control unit (28) rotational speed signals representing the rotational behavior of the coupled front wheels (6) and rear wheels (2), **characterized by**
c) at least one acceleration sensor (30) for inputting into the control unit (28) acceleration signals representing the vehicle longitudinal acceleration, and/or a vehicle GPS device for inputting into the control unit (28) position signals representing positions of the vehicle, wherein
d) the control unit (28) is designed so as to determine at least one first variable, which is characteristic of a vehicle reference speed and/or a vehicle reference acceleration, on the basis of the acceleration signals and/or the position signals, and so as to determine a second variable, which is characteristic of the rotational behavior of the, at least for braking, coupled front wheels (6) and rear wheels (2), on the basis of the rotational speed signals of a single rotational speed sensor at any point of the drivetrain, from its signals with consideration of known ratios within the drivetrain, and to calculate the brake slip of the coupled front wheels (6) and rear wheels (2) on the basis of the first variable and the second variable.

2. Vehicle according to Claim 1, **characterized in that** the brake device (1) is an electric, hydraulic, electrohydraulic, pneumatic, pneumatic-hydraulic, electropneumatic or hydropneumatic brake device.

3. Vehicle according to Claim 1 or 2, **characterized in that** at least two redundant rotational speed sensors (54, 58) are provided, wherein each rotational speed sensor (54, 58) is associated with a different component (38, 40) of the drive train (50).

4. Vehicle according to one of the preceding claims, **characterized in that** an axle differential (42), which can be locked and unlocked and which is unlocked by the control unit (28) during braking, is provided at the front axle (8).

5. Vehicle according to one of the preceding claims, **characterized in that** the coupling means (36), which can be brought into a coupling position either optionally or automatically, between the rear wheels (2) and the front wheels (6) are also provided for the purpose of transferring driving torque between the rear wheels (2) and the front wheels (6).

6. Vehicle according to Claim 5, **characterized in that** the coupling means (36) comprise a differential, which couples a drive train section (40, 44, 48) of the rear axle (4) and a drive train section (38, 42, 46) of the front axle (8), which can be locked and unlocked by the control unit (28) and which is locked by the control unit (28) at least for braking.

7. Vehicle according to one of Claims 1 to 5, **characterized in that** the coupling means comprises an all wheel clutch, which is controlled by the control unit (28), which couples or decouples a drive train section (40, 44, 48) of the rear axle (4) and a drive train section (38, 42, 46) of the front axle (8) to or from one another and which is activated in accordance with the degree of actuation of a braking value transmitter (10, 12).

8. Vehicle according to one of the preceding claims, **characterized in that** the at least one acceleration sensor (30) is designed to measure the acceleration on a plurality of axes, and the control unit (28) is designed to calculate the vehicle longitudinal acceleration from the acceleration signals associated with the axes.

9. Vehicle according to one of the preceding claims, **characterized in that** at least two redundant acceleration sensors (30) are provided.

10. Vehicle according to one of the preceding claims, **characterized in that** the at least one acceleration sensor (30) and the control unit (28) are combined to form a module.

11. Vehicle according to one of the preceding claims, **characterized in that** the control unit (28) is designed so as to calculate the instantaneous vehicle reference speed and/or the instantaneous vehicle reference acceleration from a plurality of position signals from the vehicle GPS.

12. Vehicle according to Claim 11, **characterized in that** the vehicle GPS device is integrated into the control unit (28) or forms a separate unit.

13. Vehicle according to one of the preceding claims, **characterized in that** the control unit (28) is designed so as to
a) check the plausibility and/or calibrate the acceleration signals of the acceleration sensor (30) on the basis of the position signals of the vehicle GPS device, or
b) check the plausibility and/or calibrate the position signals of the vehicle GPS device on the basis of the acceleration signals of the acceleration sensor (30).

14. Vehicle according to one of the preceding claims, **characterized in that** the control unit (28) is designed so as to determine the actual brake slip of the coupled front wheels (6) and rear wheels (2) on the basis of the signals relating to the vehicle reference speed and/or the vehicle reference acceleration and of the rotational speed signals and then to adjust the brake slip of the coupled front wheels (6) and rear wheels (2) in accordance with a deviation of the actual brake slip determined from a desired brake slip.

## Revendications

1. Véhicule équipé d'un dispositif de freinage (1), dans lequel, au freinage par des moyens d'accouplement (36) mis en position d'accouplement, les roues avant (6) d'un essieu avant (8) et les roues arrière (2) d'au moins un essieu arrière (4) sont rigidement accouplées entre elles et un couple de freinage est transmis entre les roues arrière (2) et les roues avant (6), comprenant
a) un appareil de commande (28) pour le fonctionnement en glissement de freinage contrôlé du dispositif de freinage (1) en un état, dans lequel les moyens d'accouplement (36) sont mis en une position d'accouplement, et
b) au moins un capteur de vitesse (54, 58) de rotation dans une chaîne cinématique (50) du véhicule pour l'entrée dans l'appareil de commande (28) de signaux de vitesse de rotation, qui représentent le comportement en rotation des roues avant (6) et des roues arrière accouplées,
**caractérisé par**
c) au moins un capteur d'accélération (30) pour l'entrée dans l'appareil de commande (28) de signaux d'accélération, qui représentent l'accélération longitudinale du véhicule, et/ou un dispositif GPS de véhicule pour l'entrée dans l'appareil de commande (28) de signaux de position, qui représentent des positions de véhicule dans lequel
d) l'appareil de commande (28) est constitué de façon à déterminer, sur la base des signaux d'accélération et/ou des signaux de position, au moins une première grandeur caractérisant une vitesse de référence du véhicule et/ou une accélération de référence du véhicule, et, sur la base des signaux de vitesse de rotation d'un capteur de vitesse de rotation unique en un point quelconque de la chaîne cinématique, à partir de ses signaux en tenant compte de démultiplications connues dans la chaîne cinématique, une deuxième grandeur caractérisant le comportement en rotation des roues avant (6) et des roues arrière accouplées, et à calculer le glissement de freinage des roues avant (6) et des roues arrière accouplées sur la base de la première grandeur et de la deuxième grandeur.

2. Véhicule suivant la revendication 1, **caractérisé en ce que** le dispositif de freinage (1) est un dispositif de freinage électrique, hydraulique, électro-hydraulique, pneumatique, pneumatique-hydraulique, électropneumatique ou hydropneumatique.

3. Véhicule suivant la revendication 1 ou 2, **caractérisé en ce qu'**au moins deux capteurs de vitesse de rotation redondants (54, 58) sont disposés, chaque capteur de vitesse de rotation (54, 58) étant affecté à un autre composant (38, 40) de la chaîne cinématique.

4. Véhicule suivant l'une quelconque des revendications précédentes, **caractérisé en ce qu'**un différentiel d'essieu (42), qui peut être bloqué et débloqué, est prévu à l'essieu avant (8), et est débloqué au freinage par l'appareil de commande (28).

5. Véhicule suivant l'une quelconque des revendications précédentes, **caractérisé en ce que** les moyens de couplage entre les roues arrière (2) et les roues avant (6), que l'on peut mettre en position d'accouplement de façon facultative ou automatique, sont prévus aussi pour la transmission d'un couple d'entraînement entre les roues arrière (2) et les roues avant (6).

6. Véhicule suivant la revendication 5, **caractérisé en ce que** les moyens d'accouplement (36) comprennent un différentiel qui accouple une chaîne cinématique (40, 44, 48) partielle de l'essieu arrière (4) et une chaîne cinématique (38, 42, 46) partielle de l'essieu avant (8) et qui est apte à être bloqué et débloqué par l'appareil de commande (28), ce différentiel étant bloqué par l'appareil de commande (28), au moins pour le freinage.

7. Véhicule suivant l'une quelconque des revendications 1 à 5, **caractérisé en ce que** les moyens de couplage comprennent un dispositif d'accouplement toute roue commandé par l'appareil de commande (28), qui accouple entre elles ou respectivement découple l'une de l'autre une chaîne cinématique (40, 44, 48) partielle de l'essieu arrière (4) et une chaîne cinématique (38, 42, 46) partielle de l'essieu avant (8), et qui est commandé en fonction du degré d'actionnement d'un indicateur de valeur de freinage (10, 12).

8. Véhicule suivant l'une quelconque des revendications précédentes, **caractérisé en ce que** le au moins un capteur d'accélération (30) est constitué pour la mesure de l'accélération dans plusieurs essieux et **en ce que** l'appareil de commande (28) est constitué pour le calcul de l'accélération longitudinale du véhicule à partir des signaux d'accélération affectés aux essieux.

9. Véhicule suivant l'une quelconque des revendications précédentes, **caractérisé en ce qu'**il est prévu au moins deux capteurs d'accélération redondants (30).

10. Véhicule suivant l'une quelconque des revendications précédentes, **caractérisé en ce que** le au moins un capteur d'accélération (30) et l'appareil de commande (28) sont combinés en une unité de construction.

11. Véhicule suivant l'une quelconque des revendications précédentes, **caractérisé en ce que** l'appareil de commande (28) est constitué de manière à calculer la vitesse de référence instantanée du véhicule et/ou l'accélération de référence instantanée du véhicule à partir de plusieurs signaux de position du système GPS de véhicule.

12. Véhicule suivant la revendication 11, **caractérisé en ce que** le moyen GPS du véhicule est intégré dans l'appareil de commande (28) ou constitue une unité distincte.

13. Véhicule suivant l'une quelconque des revendications précédentes, **caractérisé en ce que** l'appareil de commande (28) est constitué
a) pour rendre vraisemblables et/ou étalonner les signaux d'accélération du capteur d'accélération (30) sur la base des signaux de position du dispositif GPS de véhicule, ou
b) pour rendre vraisemblables et/ou étalonner les signaux de position du dispositif GPS de véhicule sur la base des signaux d'accélération du capteur d'accélération (30).

14. Véhicule suivant l'une quelconque des revendications précédentes, **caractérisé en ce que** l'appareil de commande (28) est constitué de façon à déterminer le glissement réel de freinage des roues avant (6) et des roues arrière (2) accouplées sur la base des signaux relatifs à la vitesse de référence du véhicule et/ou de l'accélération de référence du véhicule ainsi que des signaux de vitesse de rotation, et à régler ensuite le glissement de freinage des roues avant (6) et des roues arrière accouplées en fonction d'un écart du glissement réel au freinage déterminé à un glissement de freinage de consigne.
